# EUROPEAN PATENT SPECIFICATION

(11) **EP 1 514 671 B1**
(45) Date of publication and mention of the grant of the patent: **24.12.2008**
(21) Application number: 03736225.8
(22) Date of filing: 17.06.2003
(51) Int. Cl.: B29C 65/48, B65H 19/18

(54) **METHOD AND APPARATUS FOR CONNECTING RESIN FILMS**
VERFAHREN UND VORRICHTUNG ZUM VERBINDEN VON HARZFOLIEN
PROCEDE ET APPAREIL DE RACCORDEMENT DE FILMS DE RESINE

(30) Priority: 20.06.2002 JP 2002180118
(43) Date of publication of application: 16.03.2005
(73) Proprietor: Toyo Kohan Co., Ltd., Tokyo 102-8447 (JP)
(72) Inventor: TAKAHASHI, Satoshi, TOYO KOHAN CO., LTD., Kudamatsu-shi, Yamaguchi 744-8611 (JP); NAKAMURA, Takuji, TOYO KOHAN CO., LTD., Kudamatsu-shi, Yamaguchi 744-8611 (JP); NOMURA, Katsunori, TOYO KOHAN CO., LTD., Kudamatsu-shi, Yamaguchi 744-8611 (JP); AKITOMO, Tsutomu, TOYO KOHAN CO., LTD., Kudamatsu-shi, Yamaguchi 744-8611 (JP); HOSODA, Kazuki, TOYO KOHAN CO., LTD., Kudamatsu-shi, Yamaguchi 744-8611 (JP); YOSHIMURA, Kunihiro, TOYO KOHAN CO., LTD., Kudamatsu-shi, Yamaguchi 744-8611 (JP)
(74) Representative: Vossius & Partner
(86) International application number: PCT/JP2003/007654
(87) International publication number: WO 2004/000534

(56) References cited:
- WO-A-95/09794
- WO-A1-95/09794
- GB-A- 2 181 414
- JP-A- 1 281 896
- JP-A- 3 147 663
- JP-A- 2001 180 853
- JP-A- 2002 052 493

## Description

### Technical Field

The present invention relates to a method and an apparatus for connecting long belt-shaped resin films that are continuously advanced.

### Background Art

In the manufacturing process of most of the resin films used as various tapes and packaging materials, the films are continuously manufactured in a long belt-shaped form, split to an appropriate width, then wound into a coil-like shape of an appropriate length, and shipped to subsequent processing. The long belt-shaped resin films wound into coils are processed for various applications, but in the course of this processing, the long belt-shaped resin films wound into coils are consumed, while the processing is advanced as the films are continuously unwound. In order to prevent the interruption of the processing, immediately before the coil of the resin film is unwound and completely consumed, it has to be connected to the next coil of the resin film as for example disclosed in WO 95/09794.

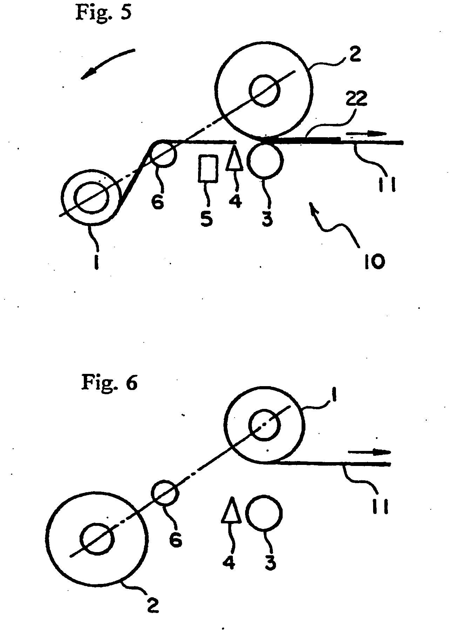

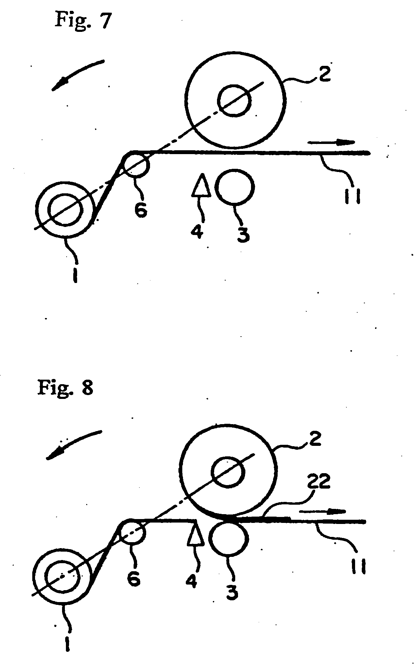

The connection of the leading resin film and trailing resin film is conducted as shown in Figs. 6 to 8. Thus, as shown in Fig. 6, a leading resin film 11 that was wound into the coil-like shape on unwinding means 1 such as an uncoiler is continuously unwound and transported to processing (not shown in the figure) in the rightward direction, as shown in the figure. If the coil of the leading resin film 11 is consumed and a small amount thereof remains, the unwinding means 1 moves (in the figure, rotates through 180°) and unwinding means 2 having a trailing resin film 22 wound thereon into a coil-like shape is positioned in the position where the unwinding means 1 was located (as shown in the figure, the unwinding means 1 and unwinding means 2 have mutual arrangement with rotational symmetry and exchange positions by rotation through 180°), as shown in Fig. 7. The leading resin film 11 is transported to the connection position via a touch roll 6 provided selectively in order to enhance smooth transportation by applying an appropriate tension to the film.

Then, as shown in Fig. 8, film pressure bonding means 3 such as a press roll is moved into the connection position (pushed up as shown in the figure), the leading resin film 11 is brought into contact with an adhesive material (not shown in the figure) such as a two-side tape that was pasted in advance onto the tip end on the outermost periphery of the trailing resin film 22 that was wound into a coil-like shape, and press bonded with the film pressure bonding means 3. Immediately thereafter, film cutting means 4 such as a film cutter is moved, brought into contact with the leading resin film 11 and cuts the film. Connection of the leading resin film 11 and trailing resin film 22 is thus conducted.

However, it was found that for certain resin films the connection could not be conducted with the above-described connection method. Most of the long belt-shaped resin films are the so-called oriented films which are oriented by stretching uniaxially in the lengthwise direction or biaxially in the lengthwise and widthwise directions. In the case of an oriented film, because the film is rigid, when a film cutter, which is a film cutting means, is brought into contact with the film, after one point of the cutter touches the film, the cutter contacts the film over the entire film width, a cutting surface along a straight line is formed and cutting is completed. If the film is thus cut, the tip end of the trailing resin film is connected without a hindrance to the leading resin film and the film is smoothly transported to the processing stage.

On the other hand, in the case of the so-called non-oriented films that were not oriented, because the film is not rigid, when the trailing resin film is connected to the leading resin film in the above-described manner, if the film cutter, which is the film cutting means, is brought into contact with one point of the film, it immediately ruptures the film into pieces and film cuttings are formed. The film cuttings adhere to the resin films that were joined and are carried over to the subsequent processing stage, thereby making it impossible to execute the processing operation of the next stage with good stability.

JP-A-01-281896 and JP-A-2002-52493 disclose a film cutting method in which an oriented film is heated prior to being longitudinally cut. JP-A-03-147663 discloses a coiling method of a thermoplastic resin sheet wherein the sheet is heated prior to cutting to avoid damage of the cutter.

It is an object of the present invention to provide a connection method and connection apparatus that enable connection operation, while continuously executing the processing operation of the subsequent process, in connecting a leading resin film and a trailing resin film which are long belt-shaped non-oriented resin films that are continuously advanced.

### Disclosure of the Invention

The method for connecting resin films in accordance with the invention is a connection method comprising the steps of cutting a long belt-shaped leading resin film that is continuously advanced, placing the tip end of a long belt-shaped trailing resin film on the cut end of the leading resin film, and connecting both films by adhesive pressure bonding, wherein the leading resin film is heated immediately prior to cutting, and wherein the aforementioned leading resin film is a non-oriented film.

The apparatus for connecting resin films in accordance with the invention comprises unwinding means for a leading non-oriented resin film, unwinding means for a trailing resin film, pressure bonding means for adhesively bonding the leading resin film and trailing resin film, cutting means for the leading resin film, and heating means for the leading resin film located immediately prior to the cutting means in the unwinding direction.

In accordance with the invention, heating the leading resin film immediately prior to cutting allows cutting to be conducted with the formation of a cutting surface along a straight line, without rupturing the non-oriented film into pieces during film cutting. Therefore, the processing operation of the next stage can be executed continuously and stably, without the film cuttings adhering to the resin films that were joined and being carried over to the subsequent processing stage.

### Brief Description of the Drawings

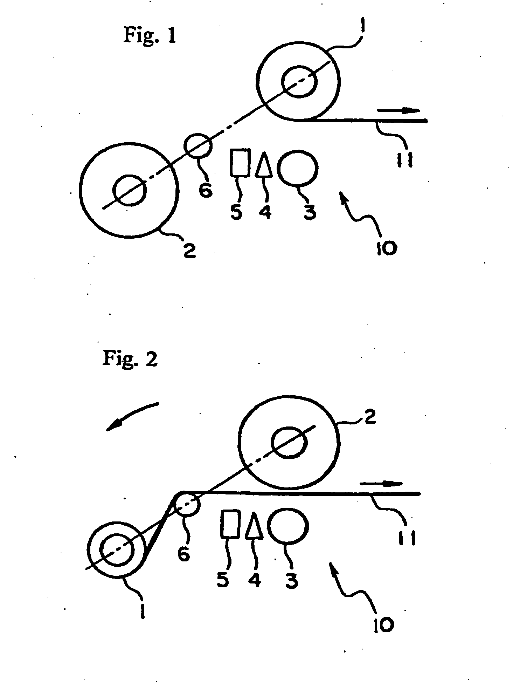

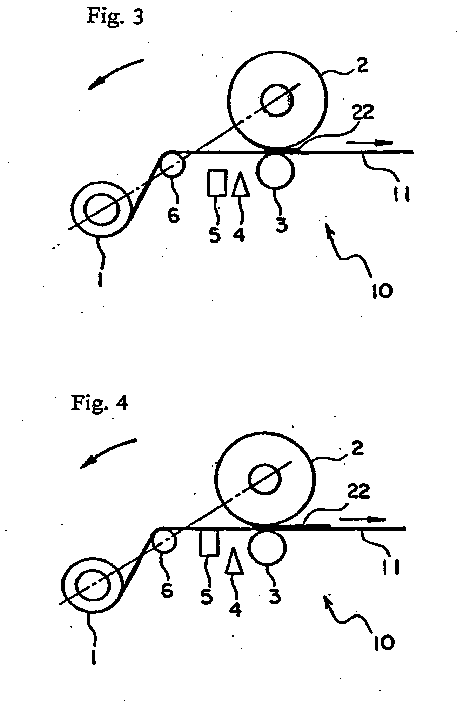

Fig. 1 is a schematic view illustrating one stage of the method in accordance with the invention for connecting a leading resin film and a trailing resin film. Fig. 2 is a schematic view illustrating another stage of the method in accordance with the invention for connecting a leading resin film and a trailing resin film. Fig. 3 is a schematic view illustrating yet another stage of the method in accordance with the invention for connecting a leading resin film and a trailing resin film. Fig. 4 is a schematic view illustrating yet another stage of the method in accordance with the invention for connecting a leading resin film and a trailing resin film. Fig. 5 is a schematic view illustrating yet another stage of the method in accordance with the invention for connecting a leading resin film and a trailing resin film. Fig. 6 is a schematic view illustrating one stage of the conventional method for connecting a leading resin film and a trailing resin film. Fig. 7 is a schematic view illustrating another stage of the conventional method for connecting a leading resin film and a trailing resin film. Fig. 8 is a schematic view illustrating another stage of the conventional method for connecting a leading resin film and a trailing resin film.

### BEST MODE FOR CARRYING OUT THE INVENTION

An embodiment of the invention will be described below in greater detail with reference to the appended drawings.

Figs. 1 to 5 illustrate the connection method and an embodiment of the apparatus for connecting resin films in accordance with the invention.

The connection apparatus 10 for resin films in accordance with the invention is composed of unwinding means 1 such as an uncoiler onto which a leading resin film 11 is wound into a coil-like shape, unwinding means 2 such as an uncoiler onto which a trailing resin film 22 is wound into a coil-like shape, film press bonding means 3 such as a press roll, film cutting means 4 such as a film cutter, film heating means 5 such as a heater, and a touch roll 6 which is selectively provided.

The unwinding means 1 and unwinding means 2 have mutual arrangement with rotational symmetry and are configured so that they exchange positions by rotation through 180°. As shown in Fig. 1, the leading resin film 11 wound on the unwinding means 1 to have a coil-like shape is continuously unwound and transported to processing (not shown in the figure) in the rightward direction, as shown in the figure. If the coil of the leading resin film 11 is consumed and a small amount thereof remains, as shown in Fig. 2, the unwinding means 1 moves by rotation through 180° and the unwinding means 2 having the trailing resin film 22 wound thereon in the coil-like shape is positioned in the position where the unwinding means 1 was located. The leading resin film 11 is transported to the connection position via a touch roll 6 provided selectively in order to enhance smooth transportation by applying an appropriate tension to the film.

Then, as shown in Fig. 3, film pressure bonding means 3 such as a press roll is moved in the connection position (pushed up as shown in the figure), the leading resin film 11 is brought into contact with an adhesive material (not shown in the figure) such as two-side tape that was pasted in advance onto the tip end on the outermost periphery of the trailing resin film 22 that was wound into a coil-like shape, and press bonded with the film pressure bonding means 3.

Then, as shown in Fig. 4, just before the connection position, the film heating means 5 such as a heater is moved and brought into contact with the leading resin film 11 to heat the film. If the non-oriented film is heated to a temperature equal to or higher than the glass transition temperature and less than the melting temperature of the resin film, preferably, to a temperature range of from glass transition temperature to glass transition temperature + 20°C, then the resin film can be provided with ductility similar to that of the oriented film. However, if heating is not conducted over a length within a predetermined range in the lengthwise direction of the resin film, then cutting along a straight line, as in cutting of the oriented films, cannot be conducted. For example, even if the non-oriented film is cut by using an electrically heated wire with a diameter of 0.6 mm, it is ruptured to pieces. On the other hand, if the heating range in the lengthwise direction is too long, then the film shrinks or wrinkles appear therein. The length of the heating range is set by taking into account the thickness of the resin films and transportation speed of the resin films, so as to obtain the above-described preferred temperature range as the film heating means 5 is brought into contact with the leading resin film 11. Further, the pressure by which the film heating means 5 is brought into contact with the leading resin film 11 also has to be set to a preferred range together with the aforementioned conditions. Moreover, it is preferred that the film cutting means be disposed as close as possible in order to reduce the decrease in temperature to a minimum.

Then, as shown in Fig. 5, the film cutting means 4 such as a film cutter is brought into contact with the heated portion of the leading resin film 11 which was heated within the predetermined range in the lengthwise direction and the film is cut. The connection of the leading resin film 11 and trailing resin film 22 is thus conducted. The connection apparatus for resin films in accordance with the invention can be also used, without actuating the film heating means, as a connection apparatus for oriented resin films.

### Embodiments

A leading resin film and a trailing resin film composed of the below-described long belt-shaped three-layer non-oriented polyester resin film were connected by using the apparatus shown in Figs. 1 to 5 under the conditions shown in Table 1.

### [Three-layer non-oriented polyester resin film]

Upper layer: transparent polyester layer with a thickness of 2 µm.

Intermediate layer: white polyester layer with a thickness of 9 µm comprising 27 wt.% white pigment.

Lower layer: white polyester layer with a thickness of 2 µm comprising 5 wt.% white pigment.

**Table 1. Test conditions and results thereof**

| Test No. | Test conditions for leading resin film | | | | | State of film after cutting | Section |
|---|---|---|---|---|---|---|---|
| | Film feed rate (m/min) | Film tension (N) | Length of heated portion (mm) | Heating temp. (°C) | Time to cutting after heating (msec) | | |
| 1 | 160 | 70 | 100 | 95 | 70 | Good | Present invention |
| 2 | 160 | 90 | 100 | 95 | 70 | Good | Present invention |
| 3 | 160 | 50 | 100 | 95 | 70 | Partial rupture | Comparative example |
| 4 | 160 | 50 | 100 | 100 | 70 | Good | Present invention |
| 5 , | 160 | 70 | 100 | 110 | 70 | Good | Present invention |
| 6 | 160 | 70 | 100 | 100 | 70 | Good | Present invention |
| 7 | 160 | 70 | 100 | 110 | 200 | Rupture | Comparative example |
| 8 | 160 | 50 | Film is not heated | | | Rupture | Conventional example |

As shown in Table 1, when the non-oriented resin film is heated to the adequate temperature range, the cut surface is formed along a straight line, without rupturing the film to pieces, similarly to cutting of oriented films. Therefore, film cuttings do not adhere to the joined resin films.

### Industrial Applicability

In accordance with the invention, in the connection method comprising the steps of cutting a leading resin film composed of a long belt-shaped non-oriented resin film that is continuously advanced, placing the tip end of a long belt -shaped trailing resin film on the cut end, and connecting by adhesive pressure bonding, when the leading resin film was heated immediately prior to cutting, the non-oriented film was cut with the formation of the cutting surface along a straight line, without being ruptured to pieces, the ruptured film cuttings were prevented from adhering to the resin films that were joined and being carried over to the subsequent processing stage, and the processing operation of the next stage could be executed continuously with good stability.

## Claims

1. A method for connecting resin films, comprising the steps of cutting (4) a long belt-shaped leading resin film (11) that is continuously advanced, placing the tip end of a long belt-shaped trailing resin film (22) on the cut end of the leading resin film, and connecting both films by adhesive pressure bonding (3), **characterised in that** the leading resin film is heated (5) immediately prior to cutting, and said leading resin film is a non-oriented film.

2. The method for connecting resin films according to claim 1, wherein the heating is conducted to a temperature equal to or higher than the glass transition temperature and less than the melting temperature of the leading resin film.

3. An apparatus (10) for connecting resin films comprising unwinding means (1) for a leading non-oriented resin film (11), unwinding means (2) for a trailing resin film (22), pressure bonding means (3) for adhesively bonding the leading resin film (11) and trailing resin film (22), and cutting means (4) for the leading resin film, **characterised in that** heating means (5) for the leading resin film are located immediately prior to the cutting means (4) in the unwinding direction.

## Patentansprüche

1. Verfahren zum Verbinden von Harzfilmen mit den Schritten: Schneiden (4) eines langen bandförmigen voreilenden Harzfilms (11), der kontinuierlich vorbewegt wird, Plazieren des Spitzenendes eines langen bandförmigen nacheilenden Harzfilms (22) auf dem Schnittende des voreilenden Harzfilms und Verbinden beider Filme durch Klebeverpressen (3), **dadurch gekennzeichnet, daß** der voreilende Harzfilm unmittelbar vor Schneiden erwärmt wird (5) und der voreilende Harzfilm ein nichtorientierter Film ist.

2. Verfahren zum Verbinden von Harzfilmen nach Anspruch 1, wobei das Erwärmen auf eine Temperatur durchgeführt wird, die gleich oder höher als die Glasübergangstemperatur und kleiner als die Schmelztemperatur des voreilenden Harzfilms ist.

3. Vorrichtung (10) zum Verbinden von Harzfilmen mit einer Abwickeleinrichtung (1) für einen voreilenden nichtorientierten Harzfilm (11), einer Abwickeleinrichtung (2) für einen nacheilenden Harzfilm (22), einer Verpreßeinrichtung (3) zum klebenden Verbinden des voreilenden Harzfilms (11) und nacheilenden Harzfilms (22), und einer Schneideinrichtung (4) für den voreilenden Harzfilm, **dadurch gekennzeichnet, daß** eine Erwärmungseinrichtung (5) für den' voreilenden Harzfilm unmittelbar vor der Schneideinrichtung (4) in Abwickelrichtung angeordnet ist.

## Revendications

1. Procédé pour raccorder des films de résine, comprenant les étapes consistant à couper (4) un long film de résine avant (11) en forme de courroie qui est continuellement avancé, à placer l'extrémité de tête d'un long film de résine arrière (22) en forme de courroie sur l'extrémité coupée du film de résine avant et à raccorder les deux films par liaison de pression adhésive (3), **caractérisé en ce que** le film de résine avant est chauffé (5) immédiatement avant d'être coupé et ledit film de résine avant est un film non orienté.

2. Procédé pour raccorder des films de résine selon la revendication 1, dans lequel le chauffage est effectué jusqu'à une température égale ou supérieure à la température de transition vitreuse et inférieure à la température de fusion du film de résine avant.

3. Appareil (10) pour raccorder des films de résine, comprenant des moyens de dévidage (1) pour un film de résine avant non orienté (11), des moyens de dévidage (2) pour un film de résine arrière (22), des moyens de liaison par pression (3) pour lier de manière adhésive le film de résine avant (11) et le film de résine arrière (22), et des moyens de coupe (4) pour le film de résine avant, **caractérisé en ce que** les moyens chauffants (5) pour le film de résine avant sont situés immédiatement avant les moyens de coupe (4) dans la direction de dévidage.
